# EUROPEAN PATENT APPLICATION

(11) **EP 4 628 981 A2**
(43) Date of publication of application: **08.10.2025**
(21) Application number: 25173975.1
(22) Date of filing: 02.05.2025
(51) Int. Cl.: G02F 1/365

(54) **GAS CELL**

(71) Applicant: ASML Netherlands B.V., 5500 AH Veldhoven (NL)
(72) Inventor: LEVHARKAR, Abhijeet, 5500 AH Veldhoven (NL); LARA-QUINTANILLA, Adrián, 5500 AH Veldhoven (NL); ABDOLVAND, Amir, 5500 AH Veldhoven (NL)
(74) Representative: ASML Netherlands B.V.

(57) **Abstract**

A gas cell for a broadband light source, the gas cell comprising: a hollow core photonic crystal fiber, HC-PCF; a first clamping device coupled to a first end of the HC-PCF; and a first actuator coupled to the first clamping device, the first actuator controllable to move the first clamping device towards a first transparent window of the gas cell.

## Description

### FIELD

The present invention relates to a gas cell for a broadband light source device.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurements system may use a broadband radiation source. Such a broadband radiation source may comprise an optical fiber having a non-linear medium through which a pulsed pump radiation beam is propagated to broaden a spectrum of the radiation. The optical fiber may be disposed within a gas cell containing a gaseous working medium.

### SUMMARY

In known techniques an optical fiber is installed within a gas cell under stretched conditions because a stretched (or a straight) fiber minimizes the bending associated propagation loss. Typically, a fiber is stretched by a process driven method where the fiber is pulled either by human or by a mechanical pull method, and glue is used as an agent for clamping and/or stretching the fiber.

The human intervention makes the process time consuming and the quality of the stretching is highly variant. Furthermore, the optical fiber is at risk of damage through use of the known techniques, resulting in a low yield.

According to one aspect of the present disclosure there is provided a gas cell for a broadband light source device, the gas cell comprising: a hollow core photonic crystal fiber, HC-PCF; a first clamping device coupled to a first end of the HC-PCF; and a first actuator coupled to the first clamping device, the first actuator controllable to move the first clamping device towards a first transparent window of the gas cell.

The first actuator may comprise a shape memory alloy actuator.

The first clamping device may be configured to apply uniform radial stress to the HC-PCF.

The first clamping device may be coupled to the first end of the HC-PCF using an adhesive (e.g. optical cement).

The first clamping device may comprise a ceramic ferrule.

The gas cell may further comprise: a second clamping device coupled to an opposing second end of the HC-PCF; and a second actuator coupled to the second clamping device, the second actuator controllable to move the second clamping device towards a second transparent window of the gas cell, the first transparent window and the second transparent window at opposing ends of the gas cell.

The second actuator may comprise a shape memory alloy actuator.

The first actuator and second actuator may apply an equal force towards the first transparent window and the second transparent window.

The gas cell may further comprise a second compliant element that couples the second clamping device to an interior wall of the gas cell, the second compliant element configured to restrict movement of the HC-PCF to at least one restricted direction.

The second clamping device may be configured to apply uniform radial stress to the HC-PCF.

The second clamping device may be coupled to the second end of the HC-PCF using an adhesive (e.g. optical cement).

The second clamping device may comprise a ceramic ferrule.

The second actuator may be controllable to move the second clamping device such that the HC-PCF is straightened.

An opposing second end of the HC-PCF may be attached to the gas cell.

The gas cell may be filled with a gaseous working medium.

The first actuator may be controllable to move the first clamping device such that the HC-PCF is straightened.

The gas cell may further comprise a first compliant element that couples the first clamping device to an interior wall of the gas cell, the first compliant element configured to restrict movement of the HC-PCF to at least one restricted direction.

The gas cell may fully enclose the HC-PCF.

The gas cell may form part of a gas cell assembly, wherein a further gas cell encloses the second end of the HC-PCF. A second compliant element may couple the second clamping device to an interior wall of the further gas cell, the second compliant element configured to restrict movement of the HC-PCF to at least one restricted direction.

The gas cell may further comprise a force sensor configured to sense a tension force along a longitudinal axis of the HC-PCF towards the first transparent window.

The gas cell may further comprise a force sensor configured to sense a tension force along a longitudinal axis of the HC-PCF towards the second transparent window.

According to another aspect of the present disclosure there is provided a broadband light source device configured for generating broadband output radiation, comprising a pump radiation source (PRS) for generating pulses of pump radiation; the gas cell (or gas cell assembly) according to any of the embodiments described herein, the HC-PCF for receiving the pulses of pump radiation and generating the broadband output radiation. The pump radiation source (PRS) may be configured to generate the pulses of pump radiation according to any of the embodiments described herein.

According to another aspect of the present disclosure there is provided a lithographic tool comprising the gas cell (or gas cell assembly) according to any of the embodiments described herein or the broadband light source device according to any of the embodiments described herein.

According to another aspect of the present disclosure there is provided a metrology apparatus comprising the gas cell (or gas cell assembly) according to any of the embodiments described herein or the broadband light source device according to any of the embodiments described herein.

According to another aspect of the present disclosure there is provided a method of configuring a gas cell for use in generating broadband radiation, the method comprising: coupling a first end of a hollow core photonic crystal fiber, HC-PCF, to a first clamping device, the first end of the HC-PCF enclosed with the gas cell; and controlling a first actuator coupled to the first clamping device, to move the first clamping device towards a first transparent window of the gas cell.

The method may further comprise coupling an opposing second end of the HC-PCF to a second clamping device in the gas cell (or in a further gas cell).

The method may further comprise attaching an opposing second end of the HC-PCF to the gas cell (or a further gas cell).

In embodiments of the present disclosure the fiber is thereby stretched to a straight fiber. The elimination of bending of the fiber advantageously avoids reductions in optical power of the broadband radiation when the gas cell is employed with a pump radiation source to form a broadband light source device.

The stretching and clamping of the fiber can be performed in an enclosed environment of the gas cell without direct human intervention, thereby reducing installation and calibration time. In embodiments of the present disclosure, the longevity of the fiber is not compromised.

In embodiments of the present disclosure it is possible to quantify and corelate the optical performance with applied force thereby removing trial and error aspect of current methods, and improving reproducibility.

Embodiments of the present disclosure can be used with different lengths of fiber for different wavelength applications.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device;
- Figure 5 depicts a schematic overview of a level sensor apparatus;
- Figure 6 depicts a schematic overview of an alignment sensor apparatus;
- Figure 7 is a schematic cross sectional view of a hollow core optical fiber in a transverse plane (i.e. perpendicular to an axis of the optical fiber);
- Figure 8 depicts a schematic representation of a broadband light source device for providing broadband output radiation;
- Figures 9 (a) and (b) schematically depict the transverse cross-sections of examples of hollow core photonic crystal fiber (HC-PCF) designs for supercontinuum generation;
- Figure 10 depicts a schematic representation of a gas cell for a broadband light source device;
- Figure 11 depicts a further schematic representation of a gas cell for a broadband light source device;
- Figure 12 illustrates an actuator in the form of a shape memory alloy actuator in a deformed state and in an undeformed state;
- Figure 13a illustrates a clamping device coupled to an end of a hollow core optical fiber and directly coupled to an actuator in the form of a shape memory alloy actuator
- Figure 13b is a schematic cross sectional view of the clamping device of Figure 13a in a transverse plane (i.e. perpendicular to an axis of the optical fiber);
- Figure 14a illustrates a clamping device coupled to an end of a hollow core optical fiber and indirectly coupled to an actuator in the form of a shape memory alloy actuator
- Figure 14b is a schematic cross sectional view of the clamping device of Figure 14a in a transverse plane (i.e. perpendicular to an axis of the optical fiber);
- Figure 15 illustrates an actuator in the form of a one-way shape memory alloy actuator coupled to a bias element; and
- Figure 16 illustrates actuators in the form of shape memory alloy actuators arranged in an antagonistic configuration.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

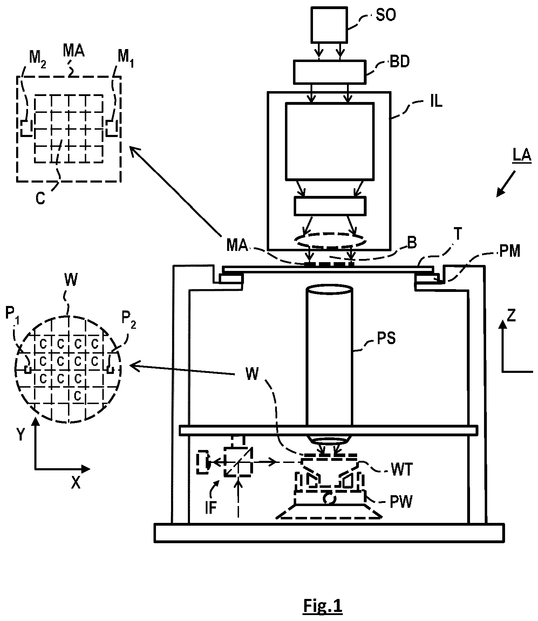

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

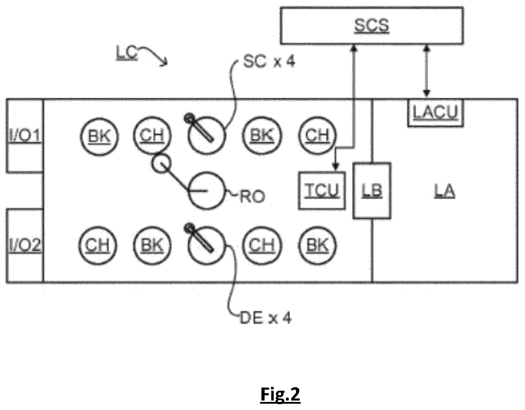

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

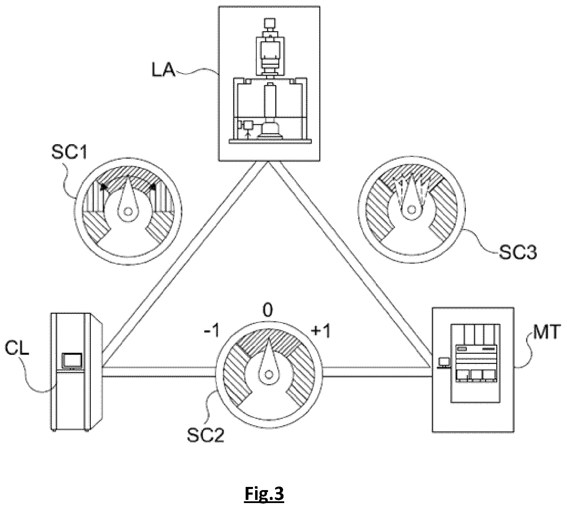

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

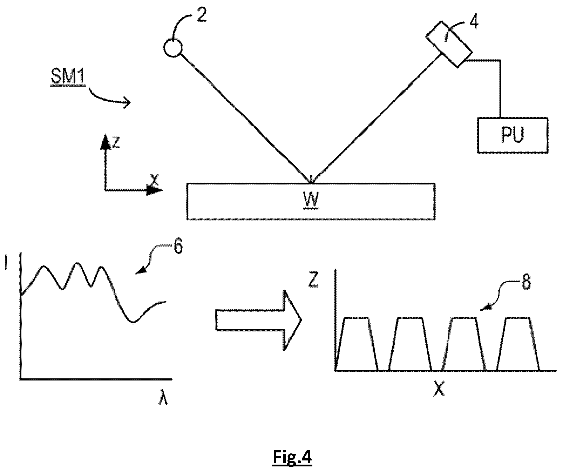

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

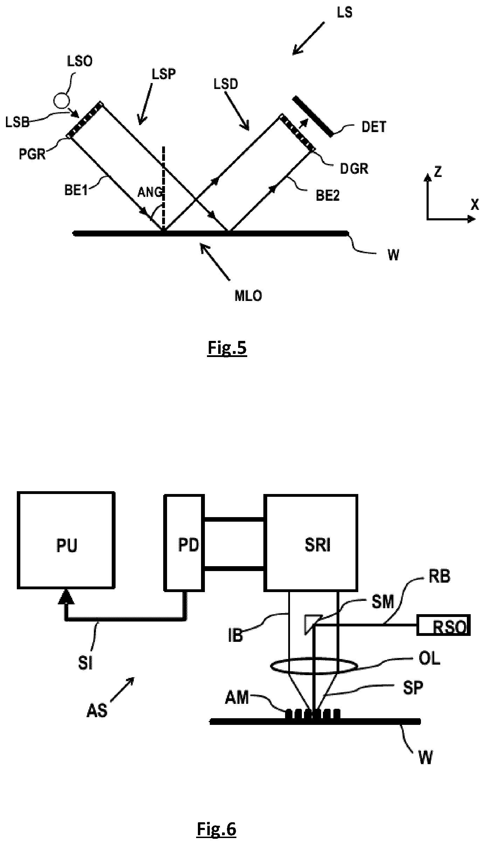

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

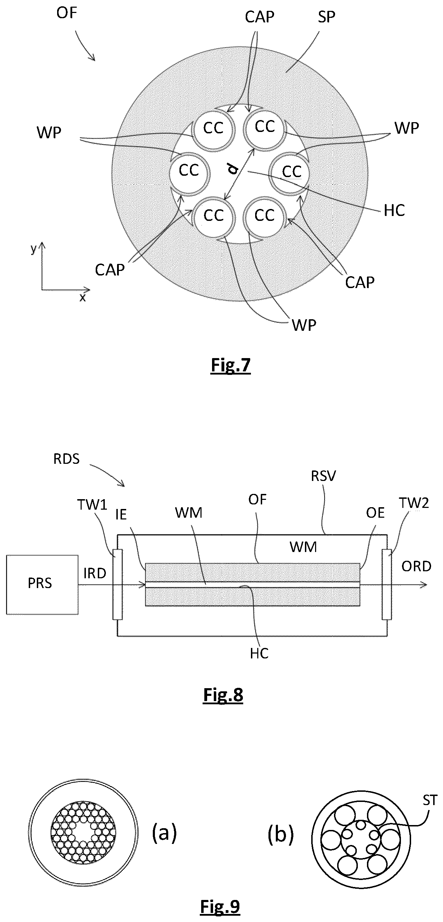

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of a broadband light source device comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface of the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a broadband light source device RDS for providing broadband output radiation. The broadband light source device RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. The gas WM may be contained within the reservoir RSV at the ambient pressure of the reservoir RSV (e.g. at an atmospheric pressure). It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. The working medium WM may generate broadband output radiation ORD, via a nonlinear optical process, when input radiation IRD (e.g. radiation pulses having a certain specification) are guided through the optical fiber OF. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion.

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more wavelengths between 200 nm and 2 µm. The input radiation IRD may for example comprise electromagnetic radiation with a wavelength of 1.03 µm.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

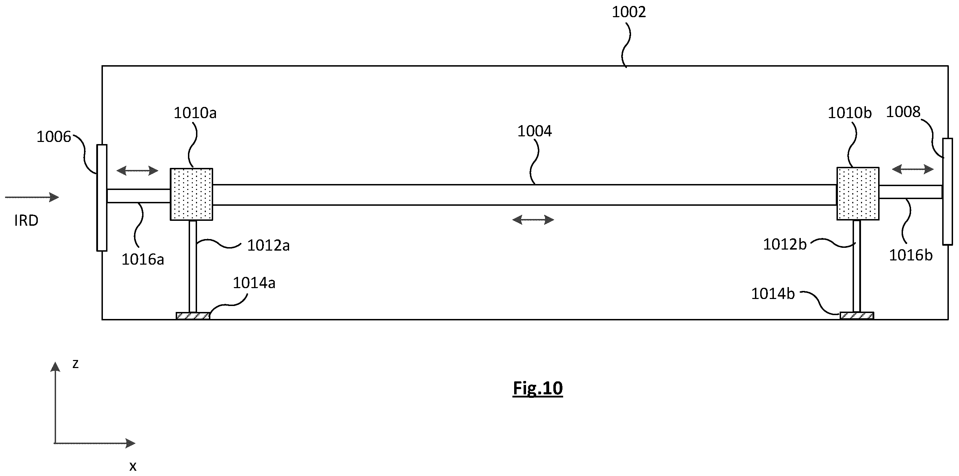

Figure 10 depicts a schematic representation of a gas cell 1002 (otherwise referred to herein as a reservoir RSV) for a broadband light source device. The gas cell 1002 comprises a first transparent window 1006 which may correspond to the first transparent window TW1 described herein and a second transparent window 1008 which may correspond to the second transparent window TW2 described herein. An optical fiber 1004 is disposed inside the gas cell 1002. The optical fiber 1004 may correspond to the optical fiber OF described herein.

In the arrangement shown in Figure 10, the gas cell 1002 encloses both the input end IE of the optical fiber 1004 and the output end OE of the optical fiber 1004. That is, the gas cell 1002 fully encloses the optical fiber 1004. The gas cell 1002 comprises a working medium WM (e.g. a gas or gas mixture) as described herein. If the optical fiber 1004 receives pulses of input radiation IRD (e.g. from a pump radiation source not shown in Figure 10), the working medium WM may be configured to broaden the spectrum of the pulses of input radiation IRD.

The gas cell 1002 comprises components to stretch (i.e. straighten) the optical fiber 1004 in an automated manner. In particular, the gas cell 1002 comprises a first clamping device 1010a coupled to the input end IE of the HC-PCF, and a second clamping device 1010b coupled to the output end OE of the HC-PCF. A first actuator 1016a is coupled to the first clamping device 1010a, and a second actuator 1016b is coupled to the second clamping device 1010b.

The first actuator 1016a is controllable to move the first clamping device 1010a towards the first transparent window 1006, and thereby pull the optical fiber 1004 towards the first transparent window 1006. The second actuator 1016b is controllable to move the second clamping device 1010b towards the second transparent window 1008, and thereby pull the optical fiber 1004 towards the second transparent window 1008.

The first actuator 1016a may for example be a shape memory alloy (SMA) actuator, a voice coil, an electro-magnetic based actuator, or a piezoelectric based actuator. Similarly, the second actuator 1016b may for example be a SMA actuator, a voice coil, an electro-magnetic based actuator, or a piezoelectric based actuator. The first actuator 1016a and the second actuator 1016b may employ the same or different actuation technology. The gas cell 1002 may be provided with an electrical feedthrough (not shown) to allow an electrical connection to be made to the first actuator 1016a. Similarly, the gas cell 1002 may be provided with an electrical feedthrough (not shown) to allow an electrical connection to be made to the second actuator 1016b.

The first actuator 1016a and the second actuator 1016b may be configured to apply an equal (and opposing) force towards the first transparent window 1006 and the second transparent window 1008 respectively. The first and second actuators 1016a,b can impart a pull force on the respective clamping devices minimizing the bending associated propagation loss. The degrees of freedom controlled by one or both of the first actuator 1016a and the second actuator 1016b, may be one (i.e. a single direction actuation), or more than one (e.g. an actuation direction in the x, y, and/or z directions).

The first clamping device 1010a is coupled to a first compliant element 1012a that couples the first clamping device 1010a to an interior wall of the gas cell 1002. The first compliant element 1012a may be coupled directly to an interior wall of the gas cell 1002, or may be coupled to a base 1014a which is attached to the interior wall (as shown in Figure 10). The second clamping device 1010b is coupled to a second compliant element 1012b that couples the second clamping device 1010b to an interior wall of the gas cell 1002. The second compliant element 1012b may be coupled directly to an interior wall of the gas cell 1002, or may be coupled to a base 1014b which is attached to the interior wall (as shown in Figure 10).

The first compliant element 1012a is configured to allow motion of the optical fiber 1004 in at least one driving direction (for tensioning of the fiber) but restricts (i.e. constrains) motion in at least one other restricted direction. For example, the first compliant element 1012a may be configured to restrict movement of the optical fiber 1004 in directions other than along the axis of the optical fiber 1004. Multiple compliant elements may be coupled to the first actuator 1016a to control the (e.g. individual) degree of freedom. Similarly, the second compliant element 1012b is configured to allow motion of the optical fiber 1004 in at least one driving direction (for tensioning of the fiber) but restricts (i.e. constrains) motion in at least one other restricted direction. For example, the second compliant element 1012b may be configured to restrict movement of the optical fiber 1004 in directions other than along the axis of the optical fiber 1004. Multiple compliant elements may be coupled to the second actuator 1016b to control the (e.g. individual) degree of freedom.

The first clamping device 1010a may be configured to apply uniform radial stress to the optical fiber 1004. This may be achieved in a number of ways. The first clamping device 1010a may comprise a ceramic ferrule. The first clamping device 1010a may comprise an adhesive (which may be ceramic, epoxy, or silicon based). The adhesive may be an optical cement (an adhesive developed for use in optical systems). The optical cement referred to herein may exhibit properties such as less thermal contraction, compatible optical properties (refraction index etc.), high thermal (temperature) resistance, low outgassing etc. (when compared to non-optical adhesives). The first clamping device 1010a may comprise a screw and/or clamp to mechanically couple itself to the optical fiber 1004 and/or the first actuator 1016a.

The second clamping device 1010b may be configured to apply uniform radial stress to the optical fiber 1004. This may be achieved in a number of ways. The second clamping device 1010b may comprise a ceramic ferrule. The second clamping device 1010b may comprise an adhesive (which may be ceramic, epoxy, or silicon based). The adhesive may be an optical cement. The second clamping device 1010b may comprise a screw and/or clamp to mechanically couple itself to the optical fiber 1004 and/or the second actuator 1016b.

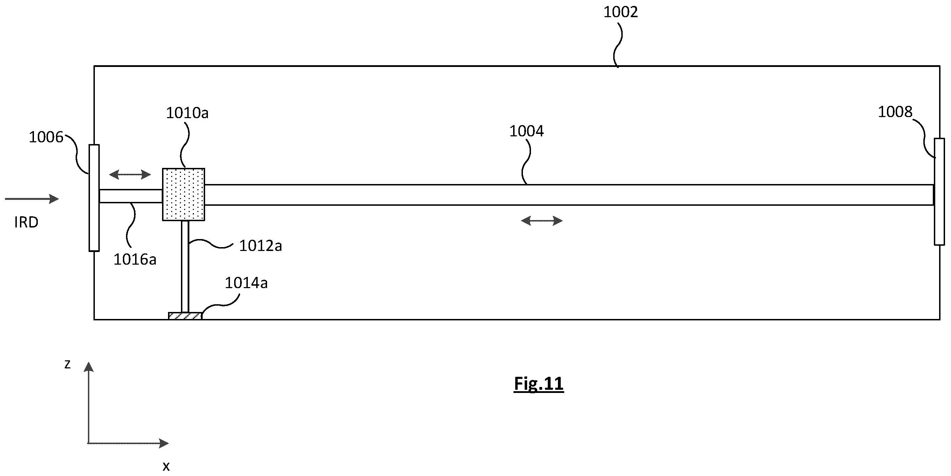

Figure 11 depicts a variant of Figure 10 in that only a single end of the optical fiber 1004 may be coupled to a clamping device and only a single actuator is present.

In the example of Figure 11, the output end OE of the optical fiber 1004 is attached to the second transparent window 1008 (or other part of the gas cell 1002) and only the input end of the optical fiber 1004 is coupled to a clamping device i.e. first clamping device 1010a. In this example, only a single actuator i.e. first actuator 1016a, is controlled to stretch and straighten the optical fiber 1004.

It will be appreciated that in a variant of Figure 11, the input end IE of the optical fiber 1004 may be attached to the first transparent window 1006 (or other part of the gas cell 1002) and only the output end of the optical fiber 1004 is coupled to a clamping device i.e. second clamping device 1010b. In this example, only a single actuator i.e. second actuator 1016b is controlled to stretch and straighten the optical fiber 1004.

In the above examples the fixing of the optical fiber 1004 to a transparent window (or other part of the gas cell 1002) may be achieved mechanically (e.g. using a clamp) or using glue.

In some embodiments of the present disclosure, one or both of the first actuator 1016a and the second actuator 1016b is a SMA actuator.

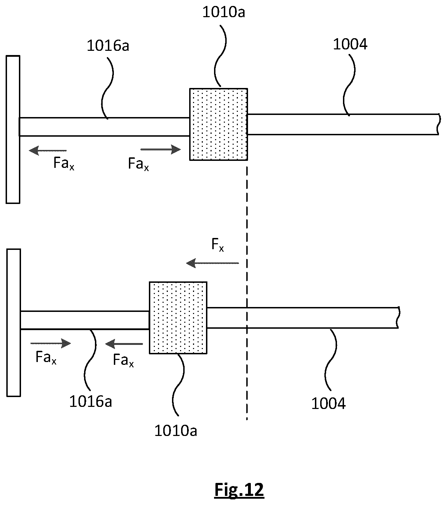

In the upper diagram of Figure 12, a first actuator 1016a in the form of a SMA actuator is shown in a deformed state, and in the lower diagram of Figure 12 the first actuator 1016a in the form of a SMA actuator in an undeformed state is shown.

In the upper diagram of Figure 12, the SMA actuator is stretched (by way of extensible forces Faₓ) such that is in the deformed state. When the deformed SMA actuator is heated above a certain temperature threshold, the SMA actuator recovers to its original undeformed (memorized) shape (by way of compression forces Faₓ) such that a tension force Fₓ is applied to the optical fiber 1004 to pull the optical fiber 1004 towards the first transparent window 1006 (as illustrated in the lower diagram of Figure 12). The heating of the SMA actuator can be achieved by ohmic heating. It will be appreciated that the same principles apply when the second actuator 1016b is a SMA actuator and is heated to pull the optical fiber 1004 towards the second transparent window 1008.

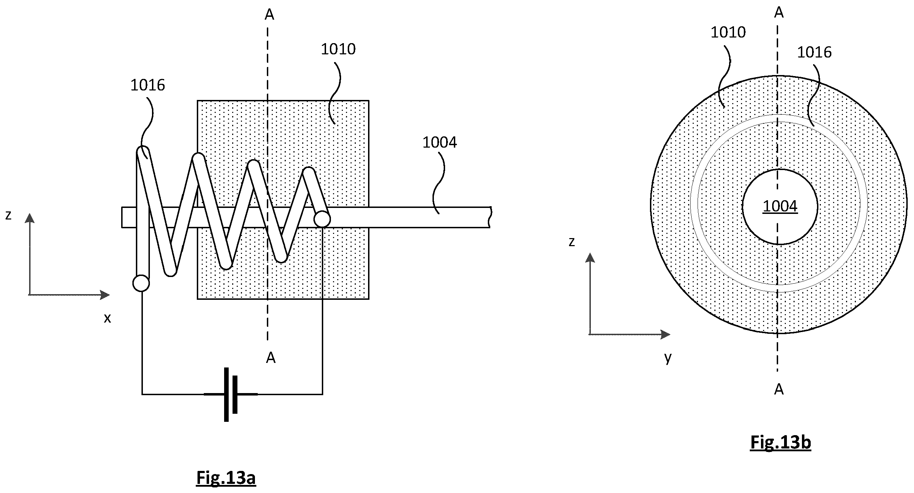

Figure 13a illustrates a clamping device (which may correspond to first clamping device 1010a or second clamping device 1010b) coupled to an end of the optical fiber 1004 and directly coupled to an actuator 1016 (which may correspond to first actuator 1016a or second actuator 1016b) in the form of a SMA actuator. The SMA actuator 1016 may be a two-way actuator that can contract and extend in two directions (two-way shape memory effect).

As shown in Figure 13a, the SMA actuator may be a contracting spring or a one-dimensional wire. The SMA actuator 1016 may be winded for increasing the contact surface area - to increase the strength in axial direction. The ends of the SMA actuator 1016 are connected to an electrical circuit which supplies a voltage and an electrical current to the SMA actuator 1016. At least one end of the SMA actuator 1016 may be embedded in the adhesive 1010 (e.g. vacuum-tight optical cement). As shown in Figure 13a, one end of the of the SMA actuator 1016 may be external to the adhesive 1010.

Figure 13b is a schematic cross-sectional view of the clamping device of Figure 13a in a transverse plane (i.e. perpendicular to an axis of the optical fiber) along the axis AA shown in Figure 13a.

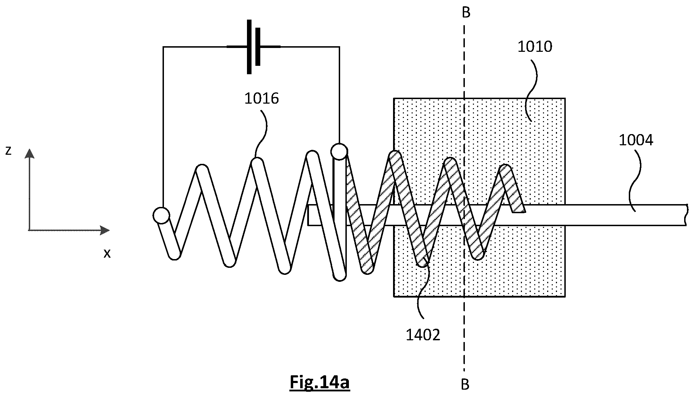

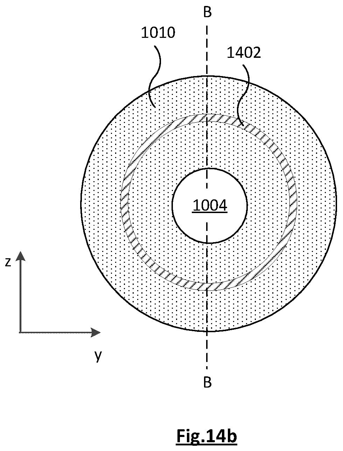

Figure 14a illustrates a clamping device (which may correspond to first clamping device 1010a or second clamping device 1010b) coupled to an end of the optical fiber 1004 and indirectly coupled to an actuator 1016 (which may correspond to first actuator 1016a or second actuator 1016b) in the form of a SMA actuator. In a variant of Figure 13a, in Figure 14 an element 1402 (which is coupled to the SMA actuator 1016) is embedded in the adhesive 1010 (e.g. vacuum-tight optical cement) instead of the SMA actuator 1016. The element 1402 is not an SMA i.e. is a non-SMA element. The element 1402 may be a spring or wire. The element 1402 may be winded for increasing the contact surface area - to increase the strength in axial direction.

Figure 14b is a schematic cross-sectional view of the clamping device of Figure 14a in a transverse plane (i.e. perpendicular to an axis of the optical fiber) along the axis BB shown in Figure 14a.

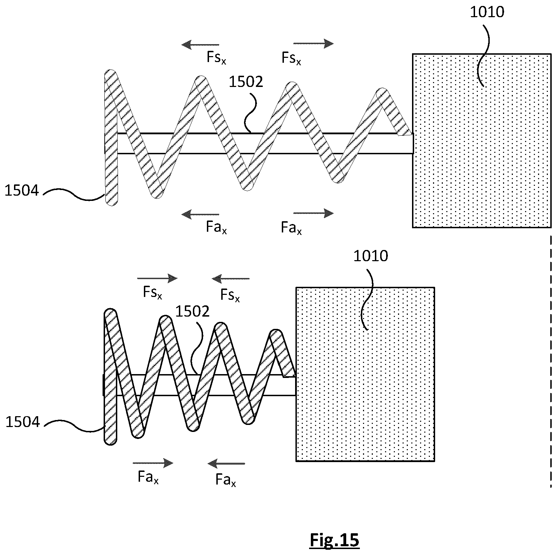

In embodiments whereby the actuator 1016 (which may correspond to first actuator 1016a or second actuator 1016b) is in the form of a SMA actuator, the SMA actuator 1016 may be a one-way SMA actuator. In the upper diagram of Figure 15, a one-way SMA actuator 1502 is shown in a deformed state, and in the lower diagram of Figure 15 the one-way SMA actuator 1502 in an undeformed state is shown.

A one-way SMA actuator can only exert compressive force when heated. Therefore, there is a need for a bias element 1504 to produce a so-called "bias force". This bias force stretches the one-way SMA actuator 1502, so that it can be contracted. Typically, this bias force can be produced, for example, by a spring, a weight (use of gravity), or another SMA actuator pulling on the opposite direction (this is called an "antagonistic configuration"). As a mere example, the bias element 1504 shown in Figure 15 is a non-SMA spring. In other examples, the bias element 1504 may be an SMA actuator in an antagonistic configuration with the one-way SMA actuator 1502. The one-way SMA actuator 1502 may be mounted along the inner space of the non-SMA spring 1504.

In the upper diagram of Figure 15, e.g. at room temperature, the bias element 1504 is pushing / extending the one-way SMA actuator 1502, and with it, the clamping device (which may correspond to first clamping device 1010a or second clamping device 1010b). In particular, the one-way SMA actuator 1502 is stretched to be in a deformed state (by way of extensible forces Faₓ) which is caused by the extensible forces Fsₓ of the bias element 1504. When the deformed one-way SMA actuator 1502 is heated above a certain temperature threshold, the one-way SMA actuator 1502 recovers to its original undeformed (memorized) shape (by way of compression forces Faₓ) which pulls / contracts the bias element 1504 (shown by compression forces Fsₓ) and with it, the clamping device towards a transparent window. The heating of the SMA actuator can be achieved by ohmic heating.

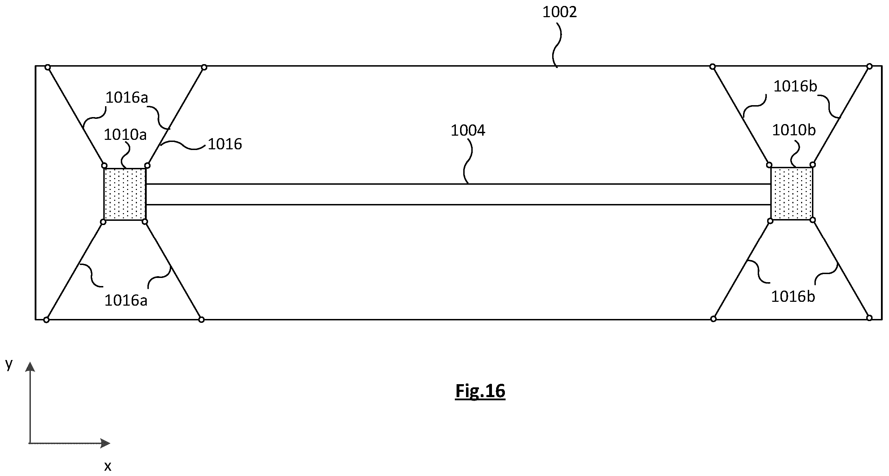

Multiple actuators may be coupled to a clamping device (e.g. first clamping device 1010a and/or second clamping device 1010b). Figure 16 illustrates a top view of the gas cell 1002 showing actuators in the form of SMA actuators arranged in an antagonistic configuration.

In the example of Figure 16, four SMA actuators 1016a are attached to the first clamping device 1010a, whereby each SMA actuator 1016a is also attached to an interior wall of the gas cell (or to a base which is attached to the interior wall). Furthermore, four SMA actuators 1016b are attached to the second clamping device 1010b, whereby each SMA actuator 1016b is also attached to an interior wall of the gas cell (or to a base which is attached to the interior wall). By controlling the four SMA actuators 1016a, different positions of the first clamping device 1010a can be reached within X, Y and Rz degrees of freedom. The other Rx, Ry and Z degrees of freedom are constrained by one or more compliant member 1012a (not shown in Figure 16). By controlling the four SMA actuators 1016b, different positions of the second clamping device 1010b can be reached within X, Y and Rz degrees of freedom. The other Rx, Ry and Z degrees of freedom are constrained by one or more compliant member 1012b (not shown in Figure 16).

In the example of Figure 16, a bias force is provided by way of the antagonistic configuration of the SMA actuators (opposing each other). Whilst Figure 16 shows four SMA actuators coupled to each clamping device, this is merely an example and there could be two, or any other number of opposing actuators coupled to each clamping device.

It will be appreciated that in the example of Figure 16, only a single end (e.g. the input end IE or the output end) of the optical fiber 1004 may be coupled to a clamping device.

Whilst embodiments have been described with reference to a single gas cell, as noted herein the two opposed ends of the optical fiber 1004 may be placed inside different gas cells (reservoirs) that form a gas cell assembly, whereby a middle section of the optical fiber 1004 is not contained inside any gas cell. The optical fiber 1004 may comprise a first end section configured to receive input radiation IRD, and a second end section for outputting broadband output radiation ORD. The first end section may be placed inside a first gas cell, comprising a working medium WM. The second end section may be placed inside a second gas cell, wherein the second gas cell may also comprise a working medium WM.

In these embodiments, the first gas cell may comprise the first clamping device 1010a and actuators(s) 1016a, and the second gas cell may comprise the second clamping device 1010b and actuators(s) 1016b.

Alternatively, the first gas cell may comprise the first clamping device 1010a and actuators(s) 1016a, and the output end OE of the optical fiber 1004 is attached to a transparent window 1008 of the second gas cell (or other part of the second gas cell) with no clamping device or actuator being provided in the second gas cell.

Alternatively, the second gas cell may comprise the second clamping device 1010b and actuators(s) 1016b, and the input end IE of the optical fiber 1004 is attached to a transparent window 1006 of the first gas cell (or other part of the first gas cell) with no clamping device or actuator being provided in the first gas cell.

In embodiments of the present disclosure, a tension force applied to the optical fiber 1004 (e.g. along the axis of the optical fiber) to pull the optical fiber 1004 towards the first transparent window 1006 and/or second transparent window 1008 may be measured. The gas cell 1002 may be comprises one or more dedicated force sensor to sense the tension force. Alternatively, in embodiments whereby an SMA actuator is used, the force may be measured by measuring the resistivity of the SMA actuator (which changes with temperature and strain). The measured force can then be subsequently accurately correlated with the performance delivered by the optical fiber 1004 when generating broadband radiation.

In embodiments whereby an SMA actuator is used, the force and displacement range of the SMA actuator depends on the choice of construction and material tuned to deformation vs temperature.

Since it is possible to generate a range of forces with the actuator(s), multiple lengths of fibers can be implemented in the gas cell.

In embodiments of the present disclosure an output performance parameter (e.g. intensity loss, signal loss etc.) of the optical fiber 1004 can be detected by a sensor (not shown) and fed back to a controller (not shown) that is configured to control an actuator 1016 based on the output performance parameter.

The gas cell according to embodiments described herein may be combined with a pump radiation source (PRS), that is configured to generate pulses of pump radiation, to form a broadband light source device, whereby the pulses of pump radiation are supplied as an input into the optical fiber 1004. The pump radiation source (PRS) may be implemented in accordance with examples described herein.

The broadband light source device according to embodiments described herein may be used as the radiation source in any of the apparatuses described herein.

Further embodiments are disclosed in the subsequent list of numbered clauses:
1. A gas cell for a broadband light source device, the gas cell comprising:
   a hollow core photonic crystal fiber, HC-PCF;
   a first clamping device coupled to a first end of the HC-PCF; and
   a first actuator coupled to the first clamping device, the first actuator controllable to move the first clamping device towards a first transparent window of the gas cell.
2. The gas cell of clause 1, wherein the first actuator comprises a shape memory alloy actuator.
3. The gas cell of clause 1 or 2, wherein the first clamping device is configured to apply uniform radial stress to the HC-PCF.
4. The gas cell of any preceding clause, wherein
   the first clamping device is coupled to the first end of the HC-PCF using optical cement.
5. The gas cell of any preceding clause, wherein the first clamping device comprises a ceramic ferrule.
6. The gas cell of any preceding clause, further comprising:
   a second clamping device coupled to an opposing second end of the HC-PCF; and
   a second actuator coupled to the second clamping device, the second actuator controllable to move the second clamping device towards a second transparent window of the gas cell, the first transparent window and the second transparent window at opposing ends of the gas cell.
7. The gas cell of clause 6, wherein the second actuator comprises a shape memory alloy actuator.
8. The gas cell of clause 6 or 7, wherein the first actuator and second actuator apply an equal force towards the first transparent window and the second transparent window.
9. The gas cell of any of clauses 6 to 8, further comprising a second compliant element that couples the second clamping device to an interior wall of the gas cell, the second compliant element configured to restrict movement of the HC-PCF to at least one restricted direction.
10. The gas cell of any of clauses 6 to 9, wherein the second clamping device is configured to apply uniform radial stress to the HC-PCF.
11. The gas cell of any of clauses 6 to 10, wherein the second clamping device is coupled to the second end of the HC-PCF using optical cement.
12. The gas cell of any of clauses 6 to 11, wherein the second clamping device comprises a ceramic ferrule.
13. The gas cell of any of clauses 1 to 5, wherein an opposing second end of the HC-PCF is attached to the gas cell.
14. The gas cell of any preceding clause, wherein the gas cell is filled with a gaseous working medium.
15. The gas cell of any preceding clause, wherein the first actuator is controllable to move the first clamping device such that the HC-PCF is straightened.
16. The gas cell of any preceding clause, further comprising a first compliant element that couples the first clamping device to an interior wall of the gas cell, the first compliant element configured to restrict movement of the HC-PCF to at least one restricted direction.
17. The gas cell of any preceding clause, further comprising:
   a force sensor configured to sense a tension force along a longitudinal axis of the HC-PCF towards the first transparent window.
18. A broadband light source device configured for generating broadband output radiation, comprising:
   a pump radiation source (PRS) for generating pulses of pump radiation; and
   the gas cell of any preceding clause, the HC-PCF for receiving the pulses of pump radiation and generating the broadband output radiation.
19. A lithographic tool comprising the gas cell of any of clauses 1 to 17 or the broadband light source device of clause 18.
20. A metrology apparatus comprising the gas cell of any of clauses 1 to 17 or the broadband light source device of clause 18.
21. A method of configuring a gas cell for use in generating broadband radiation, the method comprising:
   coupling a first end of a hollow core photonic crystal fiber, HC-PCF, to a first clamping device, the first end of the HC-PCF enclosed with the gas cell; and
   controlling a first actuator coupled to the first clamping device, to move the first clamping device towards a first transparent window of the gas cell.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatuses. Embodiments of the invention may form part of a mask inspection apparatus, a metrology apparatus (e.g. an alignment sensor apparatus, a scatterometry apparatus, an overlay metrology apparatus), or any apparatus that measures or processes an object such as a wafer (or other substrate) or mask (or other patterning device). These apparatuses may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. A gas cell for a broadband light source device, the gas cell comprising:
a hollow core photonic crystal fiber, HC-PCF;
a first clamping device coupled to a first end of the HC-PCF; and
a first actuator coupled to the first clamping device, the first actuator controllable to move the first clamping device towards a first transparent window of the gas cell.

2. The gas cell of claim **1,** wherein the first actuator comprises a shape memory alloy actuator.

3. The gas cell of claim 1 or 2, wherein the first clamping device is configured to apply uniform radial stress to the HC-PCF.

4. The gas cell of any preceding claim, wherein
the first clamping device is coupled to the first end of the HC-PCF using optical cement.

5. The gas cell of any preceding claim, wherein the first clamping device comprises a ceramic ferrule.

6. The gas cell of any preceding claim, further comprising:
a second clamping device coupled to an opposing second end of the HC-PCF; and
a second actuator coupled to the second clamping device, the second actuator controllable to move the second clamping device towards a second transparent window of the gas cell, the first transparent window and the second transparent window at opposing ends of the gas cell.

7. The gas cell of claim 6, wherein the second actuator comprises a shape memory alloy actuator.

8. The gas cell of claim 6 or 7, wherein the first actuator and second actuator apply an equal force towards the first transparent window and the second transparent window.

9. The gas cell of any of claims 6 to 8, further comprising a second compliant element that couples the second clamping device to an interior wall of the gas cell, the second compliant element configured to restrict movement of the HC-PCF to at least one restricted direction.

10. The gas cell of any of claims 1 to 5, wherein an opposing second end of the HC-PCF is attached to the gas cell.

11. The gas cell of any preceding claim, wherein the first actuator is controllable to move the first clamping device such that the HC-PCF is straightened.

12. The gas cell of any preceding claim, further comprising a first compliant element that couples the first clamping device to an interior wall of the gas cell, the first compliant element configured to restrict movement of the HC-PCF to at least one restricted direction.

13. A broadband light source device configured for generating broadband output radiation, comprising:
a pump radiation source (PRS) for generating pulses of pump radiation; and
the gas cell of any preceding claim, the HC-PCF for receiving the pulses of pump radiation and generating the broadband output radiation.

14. A metrology apparatus comprising the gas cell of any of claims 1 to 12 or the broadband light source device of claim 13.

15. A method of configuring a gas cell for use in generating broadband radiation, the method comprising:
coupling a first end of a hollow core photonic crystal fiber, HC-PCF, to a first clamping device, the first end of the HC-PCF enclosed with the gas cell; and
controlling a first actuator coupled to the first clamping device, to move the first clamping device towards a first transparent window of the gas cell.
